# EUROPÄISCHE PATENTSCHRIFT

(11) **EP 4 323 709 B1**
(45) Veröffentlichungstag und Bekanntmachung des Hinweises auf die Patenterteilung: **31.12.2025**
(21) Anmeldenummer: 22721690.0
(22) Anmeldetag: 07.04.2022
(51) Int. Cl.: F27B 9/20, F27B 9/26, F27D 3/02, F27D 3/12, F27D 5/00, F27B 9/24, F27D 3/00

(54) **BRENNHILFSMITTEL-KONSTRUKTION ZUM AUFLADEN VON BRENNGUT**
KILN FURNITURE STRUCTURE FOR LOADING MATERIAL TO BE FIRED
STRUCTURE DE FOUR POUR LE CHARGEMENT DE MATÉRIAUX À CUIRE

(30) Priorität: 13.04.2021 DE 102021001897
(43) Veröffentlichungstag der Anmeldung: 21.02.2024
(73) Patentinhaber: Schunk Ingenieurkeramik GmbH, 47877 Willich-Münchheide (DE)
(72) Erfinder: BRANDS, Detlef, 40667 Meerbusch (DE); MEURER, Joachim, 41747 Viersen (DE)
(74) Vertreter: Sparing Röhl Henseler
(86) Internationale Anmeldenummer: PCT/EP2022/059314
(87) Internationale Veröffentlichungsnummer: WO 2022/218825

(56) Entgegenhaltungen:
- EP-A1- 0 936 431
- FR-A5- 2 089 276
- GB-A- 2 161 252
- GB-A- 2 332 503
- JP-A- H01 252 419
- JP-B2- H0 760 067

## Beschreibung

Die Erfindung betrifft eine Brennhilfsmittel-Konstruktion zum Aufladen von Brenngut nach dem Oberbegriff des Anspruchs 1.

Aus FR 2 089 276 A5 ist ein Brennhilfsmittel gemäß dem Oberbegriff des Anspruchs 1 bekannt. Die nebeneinander und synchronlaufend bewegbaren Trageinheiten weisen einen Stützfuß auf, der an Kettengliedern einer endlos umlaufenden Transportvorrichtung positioniert sind.

Aus GB 2 332 503 A, GB 2 161 252 A, EP 0 936 431 A1 und JP H01 252419 A sind Brennhilfsmittelkonstruktionen zum Aufladen von Brenngut für eine Wärmebehandlung in einem Brennofen mit mindestens zwei parallel beabstandeten nebeneinander und synchronlaufenden Trageinheiten für ein Brenngestell bekannt. Mittels Stützpfosten und Stützfuß erfolgt die Positionierung auf einer Transportvorrichtung.

In diversen Branchen kommen für die thermische Behandlung von keramischen Werkstoffen Brennhilfsmittel-Konstruktionen in konventionellen Öfen in Form von z.B. Tunnel-/Herdwagen- und Rollenöfen zum Einsatz. Die Auswahl dieser Öfen erfolgt unter produktspezifischen Aspekten, wie z.B. Brenntemperatur, Zyklus, Durchsatzmenge sowie Qualitätsvorgaben der zu brennenden Ware.

Nachteilig ist, dass die Ofenwagen in Tunnelöfen (TOW) eine wesentliche Schwachstelle hinsichtlich einer energieeffizienten Nutzung im Hinblick auf die Austragungswärme darstellen. Eine möglichst weitgehende Eliminierung von Ofenwagen wäre daher wünschenswert.

Konventionelle Ofenwagen bestehen i.d.R. aus einem Stahl-Chassis im Unterbau, einer adäquaten Isolierung mittels Feuerfestprodukten, respektive Faserdämmstoffen, im Zwischenbau sowie den eigentlichen keramischen Brennhilfsmitteln auf dem Setzplateau für den Transport der zu brennenden Ware. In diesem Kontext ist der Einsatz von gewichtsoptimierten, formstabilen Brennhilfsmitteln (BHM) eine zentrale Prämisse, um ein positives Verhältnis von zu brennender Ware gegenüber den BHM zu erzielen.

Abhängig von dem individuellen Design der Ofenwagen, geben Ofen-/Anlagenbauer in Veröffentlichungen für den zusätzlichen Energieverbrauch durch den Einsatz dieser Ofenwagen in konventioneller Bauweise einen Anteil von ca. 30-50% am Gesamtenergieverbrauch des Ofens an, wobei die gesamte Peripherie des Ofens hinsichtlich Aufheizen und Kühlung entsprechend skaliert ist.

Nach dem Prinzip des schwächsten Kettengliedes führt ein vorzeitiger Verschleiß der eingesetzten Isolationsprodukte im Zwischenbau der Ofenwagen in Form von Feuerfest-Auskleidung sowie Dämmmaterialien insbesondere aufgrund von thermisch induzierten Spannungen, respektive weiteren materialspezifischen Alterungsmechanismen, zu kurzen Reparatur-Intervallen und daraus resultierend zu hohen Wartungskosten.

Innerhalb der letzten Jahre wurden von diversen Ofen-/Anlagenbauern bereits verschiedene Konzepte, welche eine deutliche Reduzierung des Gesamtenergieverbrauchs zum Ziel haben, vorgestellt, gleichwohl konnte sich bis dato noch keines dieser Konzepte im Markt etablieren.

Ferner ist der technische Ansatz bekannt, bei dem Stützen von Brennhilfsmittel-Konstruktionen unterhalb der Bodenisolation des Ofens positioniert werden, so dass Ofenwagen gemäß konventioneller Bauweise, bei denen diese vertikalen Stützen integrierter Bestandteil sind, nicht mehr zum Einsatz kommen.

Aus EP 3 287 727 A1 ist ein Brennhilfsmittel zur Aufnahme von Brenngut für das Brennen von Gegenständen mit mindestens zwei zueinander beabstandeten Seitenteilen bekannt. In die Seitenteile sind Querstäbe für das Brenngut steckbar. Die Seitenteile sind als stapelbare Kassetten ausgebildet und weisen Durchgangslöcher auf, um Querstäbe durchzustecken. Die Ausbildung von Durchgangsöffnungen in den Seitenteilen ermöglicht Lagefixierungen zwischen Querstäben und Seitenteilen des Brennhilfsmittels.

Ein vergleichbarer Brenngestellaufbau ist ferner bekannt aus DE 10 2006 038 149 A1. Auch hier sind Durchgangsöffnungen in Seitenteilen vorgesehen, um Querstäbe einzustecken.

Aus DE 297 23 936 U1 ist eine Tunnelofen-Anlage zum Brennen von keramischen Produkten bekannt, bei der die zu brennenden Formlinge auf Brenngestellen durch einen im Querschnitt rundum isolierten Tunnelofen mit Höhenabstand zur Bodenisolation transportiert und gebrannt werden. Die Tunnelofen-Anlage ist dazu mit Aufheiz-, Brenn- und Kühlzone ausgebildet. Das Transportsystem umfasst nebeneinander zwei oder mehrere die Ofenisolation durchdringende Trageinheiten für das Brenngestell.

Die Trageinheiten werden gebildet von Stützen, die auf im "kalten" Bereich, d.h. unterhalb der Tunnelbodenisolation, angeordneten Transportmitteln vorgesehen sind. Auf den Stützen sind die Brenngestelle abnehmbar montiert und in der Tunnelbodenisolation sind Brenngestell-Durchlaufbahnen vorgesehen, die auf der Tunnelbreite nebeneinander verlaufen und die von den vertikalen Stützen durchdrungen werden. Das Ergebnis ist ein energieeinsparendes, einfaches und langlebiges Transportsystem. Vorteilhaft ist ferner ein geringer Fabrikraum für den Bereich des Tunnelofens und dessen Transportsystem.

Nachteilig ist jedoch, dass die vorbekannten Brennhilfsmittel-Konstruktionen zum Aufladen und zum Tragen der Brenngestelle/Brennunterlagen und Brenngut noch zu unerwünschten Wärmeverlusten führt. Für eine hinreichende mechanische Stabilität sind größere Stützenabmessungen zu wählen. Dies gilt insbesondere für die konventionelle Feuerfest-Materialvariante Cordierit als Material für die Stützen.

Aufgabe der Erfindung ist es daher, eine Brennhilfsmittel-Konstruktion nach dem Oberbegriff des Anspruchs 1 zu schaffen, die eine verbesserte, insbesondere energieeffizientere Brennhilfsmittel-Konstruktion bereitstellt und dabei eine gute mechanische Belastbarkeit zeigt.

Diese Aufgabe wird durch die Merkmale des Anspruchs 1 gelöst.

Hierdurch wird eine Brennhilfsmittel-Konstruktion mit einer gewichts- und belastungsoptimierten Stützstruktur geschaffen, mit deren Hilfe vorbekannte Stützenkonzepte substituiert werden können. Die Brennhilfsmittel-Konstruktion ist dabei ein Gefüge von Bauteilen bei einem Tragwerk, das zur Abstützung eines Brenngestells oder einer Brennunterlage und zur Gewichtsableitung des insoweit aufgeladenen Brennguts vorgesehen ist.

Eine signifikante Reduzierung von Energiekosten, respektive Wartungskosten, ist durch die Gewichtsoptimierung realisierbar. Die Reduzierung der Energiekosten erfolgt aufgrund des Einsatzes einer signifikant geringeren thermischen Masse an Brennhilfsmitteln.

Die vorbekannte einstielige Stütze wird erfindungsgemäß mehrstielig mit mindestens zwei Stützpfosten und mindestens einem Stützfuß ausgebildet. Die Einzelstütze wird somit erfindungsgemäß zu einem Traggerüst weitergebildet mit einer großen Stützbreite. Die Bauweise ist dabei vorzugsweise skelettartig. Geliefert wird dadurch eine stabile Bauweise, die dabei so schmal wie möglich konstruiert ist, damit der Wärmeverlust so gering wie möglich ausfällt. Länge, Höhe und die konstruktive Gestaltung einer unteren Anbindungsstruktur sind variabel.

Darüber hinaus kann die thermische Masse beispielsweise durch die Nutzung von bionischen Hohlstrukturen optimiert werden. Für konstruktive Optimierungsmaßnahmen können zudem Finite-Elementberechnungen eingesetzt werden. Anwendungsspezifische Auslegungen in Abhängigkeit der Besatzgewichte an Brenngut, die im Rahmen von konkreten Projekten berechnet werden können, ermöglichen eine individuelle Realisierung.

Der mindestens eine Stützfuß kann angepasst werden an den jeweiligen Anwendungsfall und die Anbindung innerhalb einer Förder-Peripherie einer Wärmebehandlung in einem Brennofen, entweder in Form eines wie auch immer gestalteten Mitnehmers, wie beispielsweise bei einem Kettenförderer, oder für eine Lagefixierung innerhalb einer Förderkonstruktion, wie z.B. einen Ofenwagen, der unterhalb des Ofens transportiert wird.

Der Stützfuß bildet eine untere Struktur, beispielsweise eine Hohlstruktur, als Übergang von den Stützpfosten, die monolithisch ausgebildet sind.

Beispielsweise kann die jeweilige Stütze als Doppelstütze oder Zwillingsstütze ausgebildet sein.

Die erfindungsgemäß mehrstielige Stütze ist nach Art eines Bogentragwerks ausgebildet. Das Charakteristikum des Bogens ist das Auftreten von vorwiegend Druckspannungen im Gegensatz zu den Biegespannungen mit Druck und Zug beim Balken. Die Lasteintragung bei den erfindungsgemäßen Stützen wird dadurch zusätzlich verbessert.

Vorzugsweise erfolgt die Verwendung einer 3D-gedruckten, monolithischen Stützen-Struktur aus dem gasdichten, hochfesten und oxidationsbeständigen Werkstoff RBSiC, die aufgrund ihres spezifischen Designs sowohl eine hohe mechanische Stabilität aufweist, als auch im Vergleich zu konventionellen Stützkonzepten Wärmeverluste reduziert. Der 3D-Druck ermöglicht die konstruktive Gestaltung einer monolithischen Stützen-Struktur mit einem hohen Maß an mechanischer Stabilität.

Der "untere Bereich", unterhalb einer Isolierung eines Ofens, kann auf Basis der individuellen Einbausituation, respektive der ausgewählten Fördertechnik durch den Ofenbauer, konstruktiv angepasst werden. Denkbar ist insbesondere auch eine Verwendung als Bodenförderer oder eine Anbindung an eine Fördereinheit in Leichtbauweise. Die Anbindung der erfindungsgemäßen Stütze an beispielsweise eine metallische (Förder)-Peripherie kann der Ofen-Anlagenbau vorgeben.

Das erfindungsgemäße Konzept ermöglicht im Vergleich zu konventionellen "Einzelstützen" in den gängigen Querschnitten bis ca. 80mm aufgrund des Einsatzes des gasdichten und oxidations-beständigen Werkstoffs SiSiC/RBSiC die Abbildung einer gewichtsoptimierten filigranen Struktur und daraus resultierend eine Reduzierung der Breite des erfindungsgemäßen Stützpfostens, beispielsweise innerhalb eines Durchgangsbereich der Bodenisolierung eines Ofens, Breitere Einzel-Stützen verursachen höhere Wärmeverluste.

Zwecks Steifigkeitserhöhung kann vorzugsweise die Verwendung von bionischen Oberflächenstrukturen, beispielsweise von Wölbe-Strukturen vorgesehen sein. Eine topographische Optimierung mittels 3D-Druck ist insoweit möglich.

Als Werkstoffoptionen für die erfindungsgemäße Stütze aus Keramik können sein, insbesondere: Siliziuminfiltriertes, reaktionsgebundenes Siliciumcarbid (RBSIC), siliziuminfiltriertes Siliciumcarbid (SiSiC), siliziumnitrid-gebundenes Siliciumcarbid (NSiC), rekristallisiertes Siliciumcarbid (RSiC), gesintertes Siliciumcarbid (SSiC), silikatisch/mullitisch gebundene SiC-Varianten, oxidkeramische Varianten (insbesondere Al₂O₃, ZrO₂ etc.).

Weitere Ausgestaltungen der Erfindung sind der nachfolgenden Beschreibung und den Unteransprüchen zu entnehmen.

Die Erfindung wird nachstehend anhand der in den beigefügten Abbildungen dargestellten Ausführungsbeispiele näher erläutert.
Fig. 1 zeigt schematisch einen Querschnitt einer Tunnelofen-Anlage mit einer erfindungsgemäßen Brennhilfsmittel-Konstruktion mit Stützen und darauf aufgesetztem Brenngestell oder Brennunterlagen, und zwar ohne Transporteinheiten,
Fig. 2 zeigt schematisch eine perspektivische Ansicht der Tunnelofen-Anlage gemäß Fig. 1,
Fig. 3 zeigt schematisch eine perspektivische Ansicht eines Ausführungsbeispiels einer Brennhilfsmittel-Konstruktion,
Fig. 4 zeigt schematisch eine Vorderansicht einer Stütze der erfindungsgemäßen Brennhilfsmittel-Konstruktion gemäß einem weiteren Ausführungsbeispiel,
Fig. 5 ist ein Schnitt G-G nach Fig. 4,
Fig. 6 zeigt schematisch eine perspektivische Ansicht eines weiteren Ausführungsbeispiels einer Brennhilfsmittel-Konstruktion,
Fig. 7 zeigt eine Draufsicht der Brennhilfsmittel-Konstruktion gemäß Fig. 6,
Fig. 8 zeigt eine Vorderansicht der Brennhilfsmittel-Konstruktion gemäß Fig. 6,
Fig. 9 zeigt eine Seitenansicht der Brennhilfsmittel-Konstruktion gemäß Fig. 6,
Fig. 10 zeigt einen Ausschnitt C gemäß Fig. 9 in vergrößerter Darstellung.

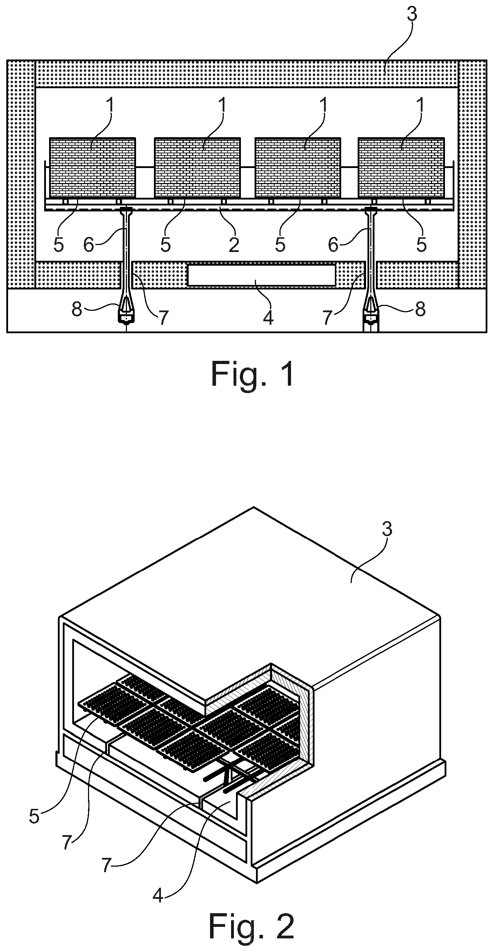

Die Fig. 1 zeigt eine Tunnelofen-Anlage zur Herstellung von gebrannten keramischen Produkten. Die zu brennenden Formlinge (Brenngut) 1 werden auf einem Brenngestell 2 durch einen im Querschnitt rundum isolierten Tunnelofen 3 mit Höhenabstand zur Tunnelofen-Bodenisolation 4 transportiert und gebrannt. Zum Brennen umfasst der Tunnelofen 3 vorzugsweise Aufheiz-, Brenn- und Kühlzone (nicht dargestellt). Eine Vielzahl von zu brennenden Formlingen 1 werden auf ein gemeinsames Brenngestell 2 aufgeladen. Das Brenngestell 2 kann, wie insbesondere Fig. 2 zeigt, gegebenenfalls weitere Brennunterlagen 5 aufweisen.

Das mit getrockneten Formlingen, das Brenngut 1, beladene Brenngestell 2 wird durch den Tunnelofen 3 mittels einer erfindungsgemäßen Brennhilfsmittel-Konstruktion gefördert, die hier beispielsweise zwei parallel beabstandet nebeneinander sowie synchronlaufend bewegbare Stützpfosten 6 umfasst, die eine Tunnelofen-Bodenisolation 4 durchdringen und sich unterhalb der Isolierschicht auf Transporteinheiten (nicht dargestellt) abstützen können. Der Tunnelofen 3 weist beispielsweise zwei auf der Tunnelbreite nebeneinander verlaufende Brenngestell-Durchlaufbahnen 7 auf, wie auch insbesondere Fig. 2 zeigt.

Die Tunnelofen-Anlage betrifft somit einen im Querschnitt rundum isolierten Tunnelofen mit einem das Brenngut 1 durch den Tunnelofen 3 bewegenden Transportsystem, das nebeneinander zwei oder mehrere eine Tunnelofenisolation 4 durchdringende Trageinheiten für ein Brenngestell 2 aufweist. Die Trageinheiten werden gebildet von vertikalen Stützen, die auf unterhalb der Tunnelofenisolation 4 angeordneten Transportmitteln (nicht dargestellt) angeordnet sind, wobei die Transportmittel mindestens zwei parallel beabstandet nebeneinander und synchronlaufend bewegbare Transporteinheiten umfassen.

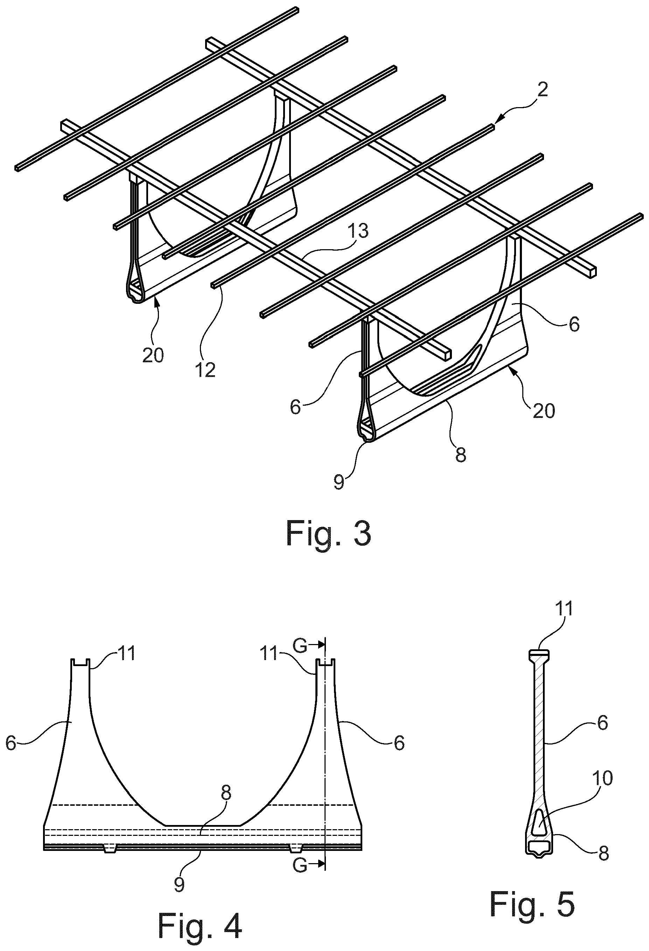

Wie Fig. 3 zeigt, ist die erfindungsgemäß Brennhilfsmittel-Konstruktion ausgebildet mit vorzugsweise vertikalen Stützen 20, die jeweils mehrstielig ausgebildet sind mit mindestens zwei zueinander beabstandeten Stützpfosten 6, die über mindestens einen Stützfuß 8 verbunden sind. Der Stützfuß 8 definiert eine Aufstandsfläche 9 zur Ableitung der Last aus Brenngestell 2 und Brenngut 1. Jede Stütze 20 besitzt somit ein kufenartiges Element in Form eines Stützfußes 8, auf dem ein tragendes, verbindendes Gestell in Form einer mehrstieligen Stütze verbaut ist. Mindestens zwei solcher Stützen 20 sind nach Art von Längsholmen mit Abstand zueinander angeordnet und spannen dadurch eine Ebene auf, die die Stützebene für das Brenngestell 2 bildet, auf dem das komplette Gewicht der Last, hier des Brennguts 1, ruht.

Die Erfindung betrifft folglich eine Brennhilfsmittel-Konstruktion zum Aufladen von Brenngut 1 für eine Wärmebehandlung in einem Brennofen mit mindestens zwei parallel beabstandet nebeneinander und synchronlaufend bewegbaren Trageinheiten für ein Brenngestell 2. Die Trageinheiten werden gebildet von Stützen 20, die vorzugsweise vertikal ausgerichtet sind und die auf Transportmitteln (nicht dargestellt) positionierbar sind. Die Stützen 20 sind mehrstielig mit mindestens zwei zueinander beabstandeten Stützpfosten 6 ausgebildet, die über mindestens einen Stützfuß 8 verbunden sind, der eine Aufstandsfläche 9 zur Ableitung der Last aus Brenngestell 2 und Brenngut 1 definiert.

Die mindestens zwei Stützpfosten 6 mit dem mindestens einen Stützfuß 8 einer vertikalen Stütze können eine Skelettbaukonstruktion bilden. Die Stützpfosten 6 sind dabei mit dem mindestens einen Stützfuß 8 monolithisch ausgebildet. Die Stützpfosten 6 und/oder der mindestens eine Stützfuß 8 sind vorzugsweise aus einer hochfesten Keramik in einer 3D-Technologie hergestellt.

Sind als Stützpfosten 6 einer insbesondere vertikalen Stütze 20 beispielsweise zwei Stützpfosten 6 vorgesehen, so sind diese, wie Fig. 3 bis Fig. 5 zeigen, vorzugsweise spiegelsymmetrisch angeordnet und erstrecken sich vertikal von dem Stützfuß 8. Ferner ist vorteilhaft, dass die Stützpfosten 6 mit Auflagerstellen am Stützfuß 8 angreifen, die, wie dargestellt, nach Art eines Bogentragwerks ausgebildet sind.

Der mindestens eine Stützfuß 8 kann als Hohlstruktur 10 ausgebildet sein. Ein Schalenaufbau kann hierzu verwendet werden. Der mindestens eine Stützfüß 8 steht zudem vorzugsweise mit den Transporteinheiten (nicht dargestellt) in Eingriff.

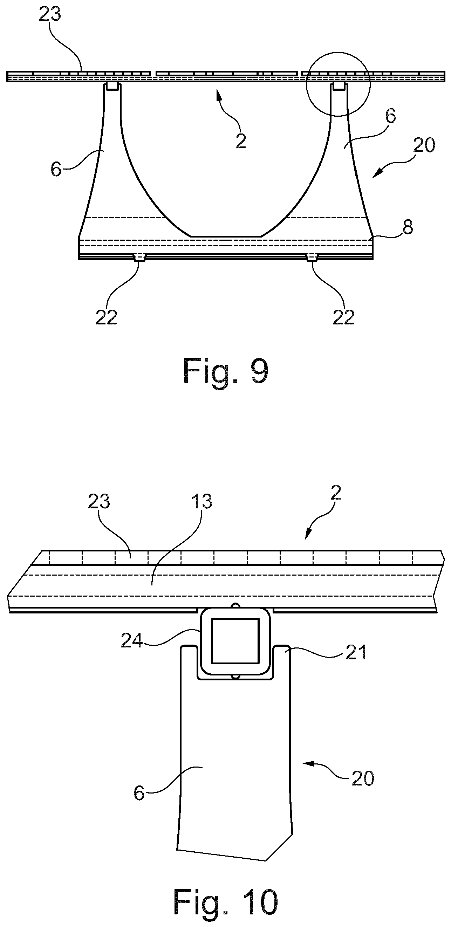

Die Stützpfosten 6 können ferner eine bionische Oberflächenstruktur, insbesondere eine Wölbe-Struktur, aufweisen. Die Stützpfosten 6 weisen ferner an ihren freien Enden 11 eine Aufnahme 21 für eine Anbringung eines Brenngestells 2 auf. Wie Fig. 10 zeigt, kann eine Lagefixierung über ein Balkenelement 24 vorgesehen sein. Die Aufnahme 21 ist vorzugsweise stirnseitig der freien Enden 11 vorgesehen. Die Aufnahme 21 bildet dann ein Auflager für ein Brenngestell mit Rosten 12, 13, die gegenüber den Stützfüßen 8 einen Überbau bilden. Der Überbau trägt die Lasten des Brennguts zu den Unterbauten in Form der mindestens zwei Stützen 20 ab. Die Stützen 20 nehmen nach Art einer Brücke die Überbaulasten auf und leiten diese in eine Gründung.

Die das Brenngut 1 transportierenden Brenngestelle 2 können als teilbare Fördersysteme ausgebildet sein. Die Brenngestelle können Roste 12, 13 aus einer feuerfesten Keramik umfassen.

Die Brenngestelle 2 können ein- bis mehretagig ausgebildet oder aufsetzbar vorgesehen sein. Die Transporteinheiten können ein als Wagen, Schubbalken oder Schlitten ausgeführtes Unterteil aufweisen, das unter der Tunnelofenisolation 4 liegt und dieselbe mit den Stützpfosten 6 durchfasst.

Die Tunnelofenisolation 4 kann eine Tunnelbodenisolation oder eine Tunneldeckenisolation sein.

Als Werkstoffoptionen für die erfindungsgemäße Stütze aus Keramik können sein, insbesondere: Siliziuminfiltriertes, reaktionsgebundenes Siliciumcarbid (RBSIC), siliziuminfiltriertes Siliciumcarbid (SiSiC), siliziumnitrid-gebundenes Siliciumcarbid (NSiC), rekristallisiertes Siliciumcarbid (RSiC), gesintertes Siliciumcarbid (SSiC), silikatisch/mullitisch gebundene SiC-Varianten, oxidkeramische Varianten (insbesondere A1₂O₃, ZrO₂ etc.)

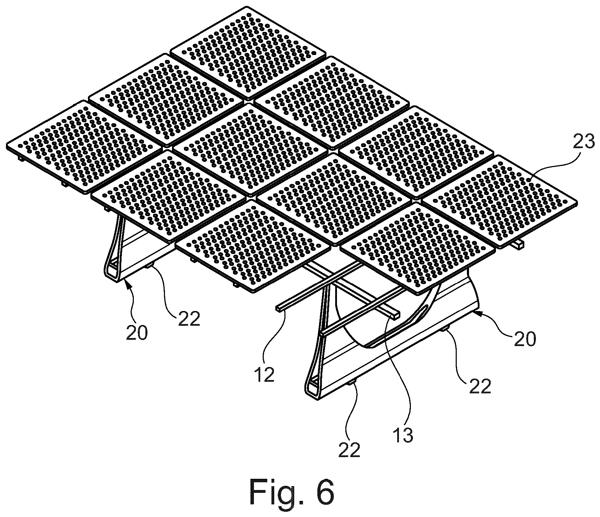

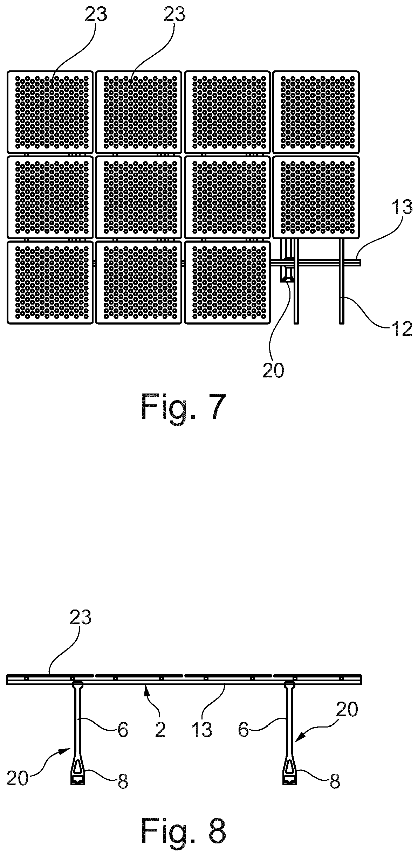

Die Fig. 6 bis Fig. 10 zeigen ein weiteres Ausführungsbeispiel der erfindungsgemäßen keramischen gewichts- und belastungsoptimierten Brennhilfsmittel-Konstruktion, bei der die Doppel- oder Mehrfachstützen 20 bodenseitig Anschlusselemente 22 zum Eingriff in ein Transportsystem (nicht dargestellt) aufweisen. Das Brenngestell 2 weist zudem neben den Rosten 12, 13 Brennunterlagen 23 auf, die ein verbessertes Aufladen von Brenngut 1 ermöglichen.

## Patentansprüche

1. Brennhilfsmittel-Konstruktion zum Aufladen von Brenngut (1) für eine Wärmebehandlung in einem Brennofen mit mindestens zwei parallel beabstandet nebeneinander und synchronlaufend bewegbaren Trageinheiten für ein Brenngestell (2), und die Trageinheiten gebildet werden von Stützen, die auf Transportmitteln positionierbar sind, die Stützen (20) mehrstielig mit mindestens zwei zueinander beabstandeten Stützpfosten (6) ausgebildet sind, die über mindestens einen Stützfuß (8) verbunden sind, der eine Aufstandsfläche (9) zur Ableitung der Last aus Brenngestell (2) und Brenngut (1) definiert, **dadurch gekennzeichnet, dass** die jeweils mindestens zwei Stützpfosten (6) mit dem mindestens einen Stützfuß (8) monolithisch geformt sind und die Stützpfosten (6) mit Auflagerstellen am Stützfuß (8) angreifen, die nach Art eines Bogentragwerks ausgebildet sind.

2. Brennhilfsmittel-Konstruktion nach Anspruch 1, **dadurch gekennzeichnet, dass** die Stützen (20) als vertikale Stützen (20) ausgebildet sind.

3. Brennhilfsmittel-Konstruktion nach Anspruch 1 oder 2, **dadurch gekennzeichnet, dass** die Stützpfosten (6) aus einer hochfesten Keramik in 3D-Druck herstellbar sind.

4. Brennhilfsmittel-Konstruktion nach einem der Ansprüche 1 bis 3, **dadurch gekennzeichnet, dass** die mindestens zwei Stützpfosten (6) spiegelsymmetrisch angeordnet von dem Stützfuß (8) vertikal sich erstrecken.

5. Brennhilfsmittel-Konstruktion nach einem der Ansprüche 1 bis 4, **dadurch gekennzeichnet, dass** der mindestens eine Stützfuß (8) als Hohlstuktur ausgebildet ist.

6. Brennhilfsmittel-Konstruktion nach einem der Ansprüche 1 bis 5, **dadurch gekennzeichnet, dass** der mindestens eine Stützfuß (8) mit einer Transporteinheit in Eingriff bringbar ist und dazu Anschlusselemente aufweist.

7. Brennhilfsmittel-Konstruktion nach einem der Ansprüche 1 bis 6, **dadurch gekennzeichnet, dass** die Stützpfosten (6) an ihren freien Enden (11) eine Aufnahme für eine Anbringung eines Brenngestells (2) aufweisen.

8. Brennhilfsmittel-Konstruktion nach einem der Ansprüche 1 bis 7, **dadurch gekennzeichnet, dass** die das Brenngut (1) transportierenden Brenngestelle (2) als teilbare Fördersysteme ausgebildet sind.

9. Brennhilfsmittel-Konstruktion nach einem der Ansprüche 1 bis 8, **dadurch gekennzeichnet, dass** die Brenngestelle (2) Roste (12, 13) aus einer feuerfesten Keramik umfassen.

10. Brennhilfsmittel-Konstruktion nach einem der Ansprüche 1 bis 9, **dadurch gekennzeichnet, dass** die Brenngestelle (2) ein- bis mehretagig ausgebildet oder aufsetzbar vorgesehen sind.

11. Brennhilfsmittel-Konstruktion nach einem der Ansprüche 1 bis 10, **dadurch gekennzeichnet, dass** die Stützfüße (6) mit Transporteinheiten in Eingriff bringbar sind, die als Wagen, Schubbalken oder Schlitten ausbildbar sind.

12. Brennhilfsmittel-Konstruktion nach Anspruch 11, **dadurch gekennzeichnet, dass** die Stützen (6) dazu ausgelegt sind eine Ofenisolation (4) zu durchdringen, um auf Transporteinheiten eines Durchlaufofens abstellbar zu sein.

13. Brennhilfsmittel-Konstruktion nach einem der Ansprüche 1 bis 12, **dadurch gekennzeichnet, dass** die Stützpfosten (6) an ihren freien Enden (11) eine stirnseitige Aufnahme (21) als Auflager aufweisen zur Positionierung eines Überbaus in Form des Brenngestells (2).

## Claims

1. Firing aid construction for loading material to be fired (1) for heat treatment in a kiln, comprising at least two parallel, spaced-apart, and synchronously movable support units for a firing rack (2), and the support units being formed by supports that can be positioned on transport means, the supports (20) are multiple-sectioned with at least two spaced-apart support posts (6), which are connected via at least one support base (8) that defines a bearing surface (9) for transferring the load from the firing rack (2) and the material to be fired (1), **characterized in that** the at least two support posts (6) are each monolithically formed with the at least one support base (8) and the support posts (6) engage with bearing points on the support base (8) which are designed in the manner of an arched support structure.

2. Firing aid construction according to claim 1, **characterized in that** the supports (20) are designed as vertical supports (20).

3. Firing aid construction according to claim 1 or 2, **characterized in that** the support posts (6) can be manufactured from high-strength ceramic using 3D printing.

4. Firing aid construction according to one of claims 1 to 3, **characterized in that** the at least two support posts (6) are arranged in a mirror-symmetrical manner and extend vertically from the support base (8).

5. Firing aid construction according to one of claims 1 to 4, **characterized in that** the at least one support base (8) is designed as a hollow structure.

6. Firing aid construction according to one of claims 1 to 5, **characterized in that** the at least one support base (8) can be engaged with a transport unit and has connecting elements for this purpose.

7. Firing aid construction according to one of claims 1 to 6, **characterized in that** the support posts (6) have a receptacle at their free ends (11) for the attachment of a firing rack (2).

8. Firing aid construction according to one of claims 1 to 7, **characterized in that** the firing racks (2) transporting the material to be fired (1) are designed as divisible conveying systems.

9. Firing aid construction according to one of claims 1 to 8, **characterized in that** the firing racks (2) comprise grates (12, 13) made of a refractory ceramic.

10. Firing aid construction according to one of claims 1 to 9, **characterized in that** the firing racks (2) are designed or can be fitted with one or more levels.

11. Firing aid construction according to one of claims 1 to 10, **characterized in that** the support bases (6) can be engaged with transport units which can be designed as trolleys, push beams or sleds.

12. Firing aid construction according to claim 11, **characterized in that** the supports (6) are designed to penetrate a furnace insulation (4) in order to be placed on transport units of a continuous furnace.

13. Firing aid construction according to one of claims 1 to 12, **characterized in that** the support posts (6) have at their free ends (11) an end face receptacle (21) as a support for positioning a superstructure in the form of the firing rack (2).

## Revendications

1. Construction d'agent d'aide à la combustion pour le chargement de combustible (1) pour un traitement thermique dans un four de combustion comportant au moins deux unités porteuses espacées parallèlement à côté l'une de l'autre et mobiles en permanence de manière synchrone pour un support de combustion (2), et les unités porteuses sont formées d'appuis, qui peuvent être positionnés sur des moyens de transport, les appuis (20) sont formés avec plusieurs montants avec au moins deux poteaux d'appui (6) espacés l'un de l'autre, qui sont reliés par l'intermédiaire d'au moins un pied d'appui (8), qui définit une surface de contact (9) pour la répartition de la charge du support de combustion (2) et du combustible (1), **caractérisée en ce que** les respectivement au moins deux poteaux d'appui (6) sont façonnés avec l'au moins un pied d'appui (8) de manière monolithique et les poteaux d'appui (6) viennent en prise avec des emplacements de repos sur le pied d'appui (8), qui sont réalisés à la manière d'un bâti en arc.

2. Construction d'agent d'aide à la combustion selon la revendication 1, **caractérisée en ce que** les appuis (20) sont réalisés comme appuis verticaux (20).

3. Construction d'agent d'aide à la combustion selon la revendication 1 ou 2, **caractérisée en ce que** les poteaux d'appui (6) peuvent être fabriqués en céramique hautement résistante par impression 3D.

4. Construction d'agent d'aide à la combustion selon l'une des revendications 1 à 3, **caractérisée en ce que** les au moins deux poteaux d'appui (6) s'étendent verticalement et sont agencés avec une symétrie de miroir par rapport au pied d'appui (8).

5. Construction d'agent d'aide à la combustion selon l'une des revendications 1 à 4, **caractérisée en ce que** l'au moins un pied d'appui (8) est réalisé comme une structure creuse.

6. Construction d'agent d'aide à la combustion selon l'une des revendications 1 à 5, **caractérisée en ce que** l'au moins un pied d'appui (8) peut être mis en prise avec une unité de transport et présente dans ce but des éléments de raccordement.

7. Construction d'agent d'aide à la combustion selon l'une des revendications 1 à 6, **caractérisée en ce que** les poteaux d'appui (6) présentent au niveau de leurs extrémités libres (11) un logement pour un montage d'un support de combustion (2).

8. Construction d'agent d'aide à la combustion selon l'une des revendications 1 à 7, **caractérisée en ce que** les supports de combustion (2) transportant le combustible (1) sont réalisés comme des systèmes convoyeurs séparables.

9. Construction d'agent d'aide à la combustion selon l'une des revendications 1 à 8, **caractérisée en ce que** les supports de combustion (2) comprennent des grilles (12, 13) en céramique résistante au feu.

10. Construction d'agent d'aide à la combustion selon l'une des revendications 1 à 9, **caractérisée en ce que** les supports de combustion (2) sont réalisés ou prévus pour être installés sur un ou plusieurs étages.

11. Construction d'agent d'aide à la combustion selon l'une des revendications 1 à 10, **caractérisée en ce que** les pieds d'appui (6) peuvent être mis en prise avec des unités de transport, qui peuvent être réalisées comme des wagons, des poutres coulissantes ou des chariots.

12. Construction d'agent d'aide à la combustion selon la revendication 11, **caractérisée en ce que** les appuis (6) sont conçus pour traverser une isolation (4) du four afin de pouvoir être montés sur les unités de transport d'un four continu.

13. Construction d'agent d'aide à la combustion selon l'une des revendications 1 à 12, **caractérisée en ce que** les poteaux d'appui (6) présentent, sur leurs extrémités libres (11), un logement (21) côté frontal comme repos pour le positionnement d'une superstructure sous forme du support de combustion (2).
